# EUROPEAN PATENT SPECIFICATION

(11) **EP 2 813 390 B1**
(45) Date of publication and mention of the grant of the patent: **19.09.2018**
(21) Application number: 12871038.1
(22) Date of filing: 09.10.2012
(51) Int. Cl.: B60N 2/75

(54) **ARMREST**
ARMLEHNE
ACCOUDOIR

(30) Priority: 13.03.2012 JP 2012055760
(43) Date of publication of application: 17.12.2014
(73) Proprietor: Suzuki Motor Corporation, Shizuoka-ken 432-8611 (JP)
(72) Inventor: NAGAMURA, Kentaro, Hamamatsu-shi Shizuoka 432-8611 (JP)
(74) Representative: Horn Kleimann Waitzhofer Patentanwälte PartG mbB
(86) International application number: PCT/JP2012/076127
(87) International publication number: WO 2013/136570

(56) References cited:
- EP-A2- 0 318 640
- JP-A- H0 885 342
- JP-A- 2002 019 509
- JP-A- 2002 046 520
- JP-A- 2009 166 521
- JP-A- 2011 011 578
- JP-B2- 3 838 555
- JP-B2- 4 114 925

## Description

### FIELD OF THE INVENTION

The present invention relates to an armrest for a vehicle passenger and for attachment to a door trim that constitutes the interior of a vehicle door.

### BACKGROUND OF THE INVENTION

A door trim, which is an interior member, is arranged on the vehicle cabin side of a door panel, which is an exterior member, of a vehicle door. An armrest for a vehicle passenger is attached to this door trim. The armrest needs to be high-strength in order to obtain a sense of stability when a passenger places their elbow on it. However, if the strength is too high, collision load in a collision from the side of the vehicle (in a lateral collision) is easily transmitted from the door trim to the passenger's elbow, and there is the risk of an increase in the amount of damage to the passenger. For this reason, there is demand for the armrest to have a structure that ensures sufficient strength needed for normal situations and distributes (disperses) collision load in a lateral collision or the like.

For example, in Patent Document 1, a fracture line that extends in the vehicle forward-rearward direction is provided in substantially the center of the armrest in the vehicle width direction. Accordingly, when pressed against the seated occupant in a vehicle lateral collision, the armrest undergoes deformation by bending at the fracture line, which is a weak portion, thus distributing the collision load exerted on the armrest and reducing the impact exerted on the passenger. The rigidity of the armrest can be increased by aligning multiple ribs in the vehicle forward-rearward direction on the reverse face of the armrest.

### PRIOR ART DOCUMENTS

### PATENT DOCUMENTS

Patent Document 1: Japanese Patent Laid-open Publication No. 2009-166521
JP H08 85342A describes an interior part for an automobile having plural plates of deformation preventing ribs that are integrally provided on a back surface of a resin core material at an interval between each other to cross a groove part installed on the resin core material. The interior part comprises further a notch directed to the groove part that is cut and formed in a lower edge of the deformation preventing rib.

EP 0 318 640 A2 describes a door lining for motor vehicles comprising an armrest that is a separate plastic injection-moulded component made of thermoplastic which has a flange which can be placed essentially parallel against the corresponding fastening area of the door lining.

### SUMMARY OF THE INVENTION

### PROBLEMS TO BE SOLVED BY THE INVENTION

However, when the armrest of Patent Document 1 undergoes deformation by bending at the fracture line in a lateral collision, there is the risk of the upper surface side (upper face side) of the armrest, which is the bending face (breaking face), becoming pointed upward. Also, with the configuration of Patent Document 1, there are cases where the fracture line bulges up on the design face due to load that is exerted when the passenger places their elbow on the armrest (referred to hereinafter as "the load of a placed elbow"), and thus there is the risk of inviting deterioration in attractiveness and thus a problem in the appearance.

In view of such problems, an object of the present invention is to provide an armrest that does not invite an upward-pointed shape or a problem in the appearance and enables both ensuring high strength and the dispersion of load.

### MEANS TO SOLVE THE PROBLEM

In order to solve the above-described problems, a representative configuration of an armrest according to the present invention is an armrest for a vehicle passenger and for attachment to a door trim that constitutes the interior of a vehicle door, the armrest including: an upper face placement of an elbow of the passenger; a side face that extends downward from an inward end, with respect to a vehicle width direction, of the upper face; a connection portion that is formed at a predetermined location at an outward end, with respect to the vehicle width direction, of the upper face, and is for connection to the door trim; and a reinforcement rib that extends downward from a reverse side of the upper face between the connection portion and the side face, wherein a notch having a height such that a vertex thereof does not reach the upper face is formed in the reinforcement rib.

According to the above configuration, high strength for withstanding the load of a placed elbow from a passenger's elbow is ensured by the reinforcement rib. In particular, the reinforcement rib is provided in the vicinity of the connection portion, which is stronger than other portions due to being connected to the door trim. For this reason, the support strength of the reinforcement rib can be increased, and the load of a placed elbow exerted on the armrest can be received by the reinforcement rib and the connection portion, that is to say by the door trim as a whole, thus making it possible to improve the load bearing characteristics of the armrest and to suppress problems such as rattling when the elbow is placed. Also, since the reinforcement rib is supported to the door trim via the connection portion, the load of a placed elbow exerted on the armrest can be efficiently transmitted to the door trim via the connection portion.

Furthermore, a notch having a height such that the vertex thereof does not reach the back face of the upper face is formed in the reinforcement rib. This notch serves a weak portion (portion with a low strength) in the reinforcement rib, and collision load (compression load) exerted on the armrest in a lateral collision is concentrated at the vertex of the notch. Fractures thus form between the back face of the upper face and the vertex of the notch due to the concentrated collision load, and the collision load is dispersed. Since the notch has a height such that the vertex thereof does not reach the back face of the upper face, that is to say since a portion of the reinforcement rib remains between the back face of the upper face and the vertex of the notch, fractures form only in the remaining reinforcement rib portion, and the upper face of the armrest does not become a broken face. This makes it possible to favorably disperse the collision load and reduce the amount of damage to the passenger. Also, according to the above configuration, the load of a placed elbow that is normally exerted can be absorbed by the portion of the reinforcement rib that remains between the back face of the upper face and the vertex of the notch. This makes it possible to suppress a design problem such as a poor appearance caused by a fracture line formed in the armrest as in conventional technology.

In addition, according to the present invention, a plurality of the reinforcement ribs are arranged side by side in the vehicle forward-rearward direction on the armrest, and the vertices of the notches formed in the plurality of reinforcement ribs may be arranged at different positions in the vehicle width direction. According to this, the positions of the vertices of the notches that are weak portions in the reinforcement ribs are shifted in the vehicle width direction in the vehicle forward-rearward direction of the armrest. Accordingly, even if the load of a placed elbow is exerted on the upper face of the armrest over an extended period of time during use over the years, it is possible to prevent the formation of fractures in the upper face caused by the notch and to further suppress design problems, compared with the case where the vertices of the notches are arranged at the same position in the vehicle width direction.

The vertices of the notches formed in the plurality of reinforcement ribs may be located farther inward in the vehicle width direction the closer the reinforcement rib is to a vehicle front side. According to this configuration, when the upper face of the armrest is viewed from above or below, the vertices of the notches are located on a line that extends from the vehicle rearward side and the outer side in the vehicle width direction to the vehicle forward side and the inner side in the vehicle width direction. In other words, a weak portion line is set in the upper face of the armrest. This weak portion line extends toward the vehicle forward side and the inner side in the vehicle width direction (corner portion) that is high-strength due to the upper face and the side face being connected. For this reason, the upper face of the armrest is less likely to break (a broken face is less likely to form) when a high collision load is exerted in a lateral collision or the like, and it is possible to more reliably reduce the amount of damage to the passage.

The vertices of the notches formed in the plurality of reinforcement ribs may be located closer to the upper face the closer the reinforcement rib is to a vehicle front side. According to this configuration, on the vehicle rearward side of the armrest where the passenger's elbow is placed, that is to say where the load of a placed elbow is likely to be exerted, the distance between the back face of the upper face and the vertices of the notches formed in the reinforcement rib is longer, and a larger portion of the reinforcement rib remains therebetween. This enables ensuring high strength against the load of a placed elbow in the ribs on the vehicle rearward side. On the other hand, among the notches formed in the reinforcement ribs on the vehicle forward side of the armrest, the distance between the back face of the upper face and the vertex of the notch formed in the reinforcement rib is shorter, thus increasing the amount of deformation of the reinforcement rib and effectively alleviating collision load. This makes it possible to promote both ensuring high strength and the dispersion of load.

### EFFECTS OF THE INVENTION

The present invention enables providing an armrest that does not invite an upward-pointed shape or a problem in the appearance and enables both ensuring high strength and the dispersion of load.

### BRIEF EXPLANATION OF THE DRAWINGS

FIG. 1 is a diagram showing a door that includes an armrest according to an embodiment.
FIG. 2 is an enlarged view of a door trim in FIG. 1(b).
FIG. 3 is a top view of the armrest shown in FIG. 1(b).

### INDEX TO THE REFERENCE NUMERALS

100 ... door; 102 ... door panel; 104 ... door trim; 110 ... board; 120 ... ornament; 120a ... boss insertion hole; 130 ... pocket; 140 ... armrest; 142 ... upper face; 142a ... back face; 143 ... corner portion; 144 ... side face; 146a to 146e ... connection portion; 147a ... boss seating face; 148a ... welding boss; 150a to 150j ... reinforcement rib; 152a, 152b, 152j ... notch; 154a, 154b ... remaining portion.

### EMBODIMENTS OF THE INVENTION

A preferred embodiment of the present invention will be described in detail below with reference to the accompanying drawings. The dimensions, materials, other specific numerical values, and the like in this embodiment are merely illustrative examples for facilitating understanding of the invention, and are not intended to limit the present invention unless otherwise specifically stated. Note that elements having substantially the same functions and configurations in this description and the drawings have been given the same reference signs in order to omit redundant descriptions, and elements not directly related to the present invention have been omitted from the drawings.

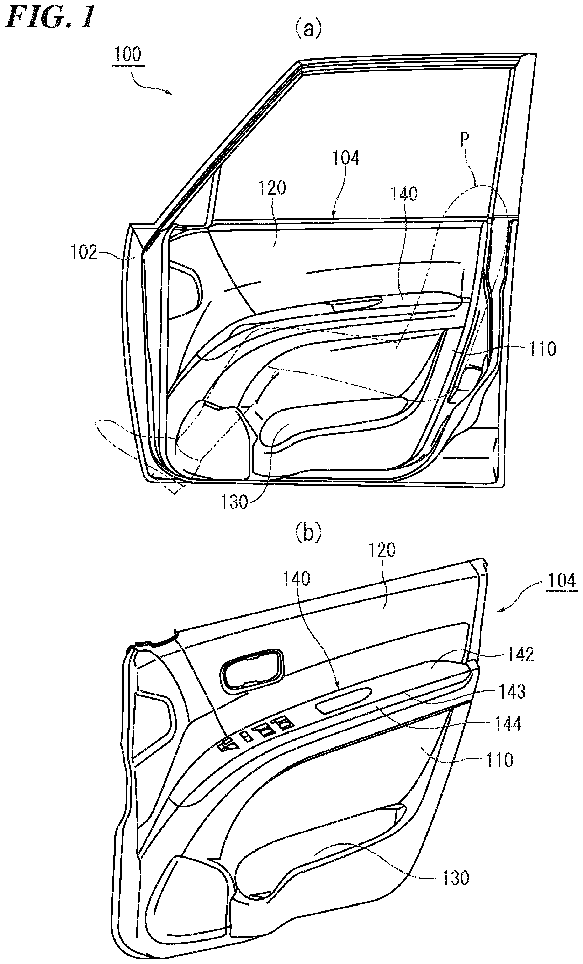

FIG. 1 is a diagram showing a door 100 that includes an armrest of the present embodiment. FIG. 1(a) is a side view of a vehicle cabin side of the door 100, and FIG. 1(b) is a perspective view of a door trim 104 and an armrest 140 in FIG. 1(a). As shown in FIG. 1(a), the door trim 104, which is an interior member, of the door 100 of a vehicle (not shown in its entirety) is arranged on the vehicle cabin side of the door panel 102, which is an exterior member.

As shown in FIG. 1(b), the door trim 104 is constituted by a board 110, which serves as its body, and various members attached thereto. Examples of the members attached to the board 110 include an ornament 120 that constitutes the upper portion of the side face (design face) of the door trim 104, and a pocket 130 that forms a storage space in the door 100. The armrest 140 for a passenger P (indicated by dashed double-dotted lines) is attached to the door trim 104.

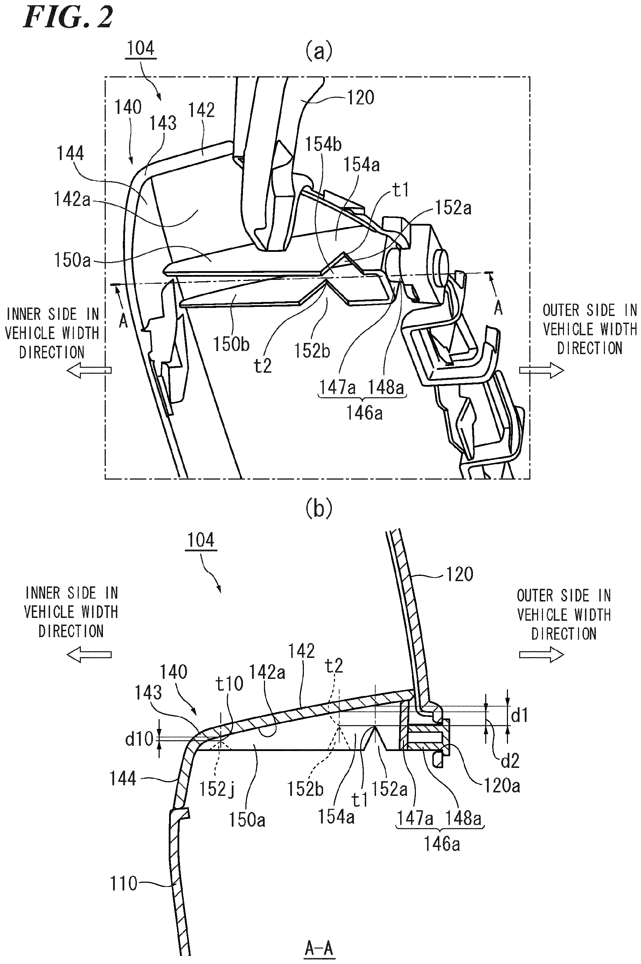

FIG. 2(a) is an enlarged perspective view of the door trim 104 in FIG. 1(b) as observed from below on the rear side of the vehicle, and FIG. 2(b) is a cross-sectional view taken along A-A in FIG. 2(a). Note that the board 110 of the door trim 104 is not shown in FIG. 2(a) in order to facilitate understanding.

Also, although the present embodiment is described taking the example of a configuration in which the armrest 140 is attached to the ornament 120 that is part of the door trim 104, there is no limitation to this, and it goes without saying that similar effects are obtained even with a configuration in which the armrest 140 is attached to the body (i.e., the board 110) of the door trim 104. Furthermore, although the present embodiment is described taking the example of the case where the armrest 140 is attached to the ornament 120 (door trim 104) by welding, there is no limitation to this case either, and naturally the present invention is also applicable in the case where the armrest 140 is attached to the ornament 120 by another means such as clip attachment or screw-fastening.

As shown in FIG. 2(b), the armrest 140 of the present embodiment has an upper face 142 that serves as an elbow placement face for the passenger P, and a side face 144 that extends downward from the inner end portion of the upper face 142 with respect to the vehicle width direction. In other words, the armrest 140 is substantially shaped as an "L" formed by the upper face 142 and the side face 144 when viewed in cross-section in the vehicle width direction. Also, a connection portion 146a for connecting the armrest 140 to the door trim 104 (the ornament 120 in the present embodiment) is provided at a predetermined location in an outer end portion of the upper face 142 of the armrest 140 with respect the vehicle width direction.

The connection portion 146a of the present embodiment is constituted by a boss seating face 147a that is provided so as to extend downward in the vicinity of the outward end, with respect to the vehicle width direction, of the upper face 142 of the armrest 140, and a welding boss 148a that protrudes outward from the boss seating face 147a in the vehicle width direction. The ornament 120 and the armrest 140 are welded together (the armrest 140 is connected to the ornament 120 at the connection portion 146a) by inserting the welding boss 148a into a boss insertion hole 120a formed in the vicinity of the lower end of the ornament 120, and melting the end face of the welding boss 148a.

As shown in FIG. 2(a), in order to ensure high strength for withstanding the load of a placed elbow from the passenger P, reinforcement ribs 150a and 150b that extend downward from the reverse side (back face 142a) of the upper face 142 are formed over the entire vehicle-width-direction range of the back face 142a side of the armrest 140. In particular, in the present embodiment, the reinforcement ribs 150a and 150b are arranged between the boss seating face 147a (connection portion 146a) and the side face 144 on the back face 142a side of the armrest 140.

The region of the armrest 140 in the vicinity of the boss seating face 147a that constitutes the connection portion 146a has a higher strength than other regions due to being connected to the ornament 120 (door trim 104). The support strength of the reinforcement ribs 150a and 150b can be increased by arranging the reinforcement ribs 150a and 150b in the vicinity of the connection portion 146a that is high-strength.

Also, according to this configuration, the load of a placed elbow that is exerted on the armrest 140 is received by the reinforcement ribs 150a and 150b and the connection portion 146a, that is to say the entirety of the door trim 104. For this reason, the load bearing characteristics of the armrest 140 can be improved over the case where the reinforcement ribs are simply provided without giving consideration to the position on the armrest 140 in the vehicle forward-rearward direction. Also, since the reinforcement ribs 150a and 150b are supported to the door trim 104 via the connection portion 146a, the load of a placed elbow that is exerted on the armrest 140 can be efficiently transmitted to the door trim 104 via the connection portion 146a. This enables suppressing problems such as rattling when the passenger P places their elbow on the upper face 142 of the armrest 140, and enables obtaining stability when the elbow is placed on the armrest.

Furthermore, a feature of the present embodiment is that notches 152a and 152b, which have heights such that vertices t1 and t2 do not reach the upper face 142 (technically the back face 142a thereof), are formed in the reinforcement ribs 150a and 150b formed on the armrest 140. In other words, remaining portions 154a and 154b, which are partial remaining regions of the reinforcement ribs 150a and 150b, are provided between the back face 142a of the upper face 142 of the armrest 140 and the vertices t1 and t2 of the notches 152a and 152b formed in the reinforcement ribs 150a and 150b.

Since the reinforcement rib rigidity is too high if the reinforcement ribs are simply formed over the entire vehicle-width-direction range of the back face side of the armrest as in conventional technology, there is the risk that the reinforcement ribs will remain in a taut state in a lateral collision, collision load (compression load) exerted on the armrest will be transmitted as is to the passenger, and the amount of damage to the passenger will increase. In contrast, with the configuration of the present embodiment, the notches 152a and 152b of the reinforcement ribs 150a and 150b are weak portions in the armrest 140. Collision load (compression load) exerted on the armrest 140 in a lateral collision is therefore concentrated at the vertices t1 and t2 of the notches 152a and 152b. Due to the concentrated collision load, fractures then form in the remaining portions 154a and 154b (partial remaining regions of the reinforcement ribs) that are provided between the back face 142a of the upper face 142 and the vertices t1 and t2 of the notches 152a and 152b, and the collision load is dispersed.

Here, since the vertices of the notches 152a and 152b do not reach the back face 142a of the upper face 142, fractures form only in the remaining portions 154a and 154b, and it is possible to suppress breakage of the upper face 142 of the armrest 140. Accordingly, with this configuration, the amount of damage to a passenger can be reduced by favorably dispersing collision load using the notches 152a and 152b of the reinforcement ribs 150a and 150b, and the formation of an upward-pointed shape can be prevented using the remaining portions 154a and 154b that remain above the vertices t1 and t2 of the notches 152a and 152b.

Also, the configuration of the present embodiment makes it possible for the load of a placed elbow exerted on the armrest 140 to normally be absorbed by the remaining portions 154a and 154b. This makes it possible to suppress the formation of fractures by the load of a placed elbow exerted during normal use over time, which has been a problem when a fracture line is formed in the elbow placement face (upper face) of the armrest as in conventional technology, and to suppress design problems such as poor appearance due to bulging of this fracture line.

Here, multiple reinforcement ribs (the two reinforcement ribs 150a and 150b in the present embodiment) are arranged side by side in the vehicle forward-rearward direction in the vicinity of the connection portion 146a of the armrest 140 (see FIG. 2), and in particular, the reinforcement ribs 150a and 150b are arranged in front of and behind the one connection portion 146a in the vehicle forward-rearward direction in the present embodiment. In such a case, it is sufficient that the vertices t1 and t2 of the notches 152a and 152b (the notch 152b is shown by a virtual line in FIG. 2(b)) formed in the reinforcement ribs 150a and 150b are arranged at different positions in the vehicle width direction as shown in FIG. 2(b).

According to the above-described configuration, the positions of the vertices t1 and t2 of the notches 152a and 152b, which are weak portions, in the reinforcement ribs 150a and 150b are shifted in the vehicle width direction along the vehicle forward-rearward direction of the armrest 140. This makes it possible to more favorably prevent the formation of fractures in the upper face 142 caused by the notches 152a and 152b when the load of a placed elbow is exerted on the upper face 142 of the armrest 140 over an extended period of time during use over the years, and makes it possible to further suppress design problems.

In particular, in the case where the multiple reinforcement ribs 150a and 150b are formed in the vicinity of the connection portion 146a, that is to say in a narrow range, as in the present embodiment, they can be formed so as to be very close to each other in the vehicle forward-rearward direction. If the vertices t1 and t2 of the notches 152a and 152b of the reinforcement ribs 150a and 150b are arranged at the same position in the vehicle width direction, the two weak portions will be located in a very narrow range, and therefore a more reliable countermeasure is needed to prevent the formation of fractures in the upper face 142. Accordingly, in the case of forming the multiple reinforcement ribs 150a and 150b for the one connection portion 146a, it is preferable to arrange the vertices t1 and t2 of the notches 152a and 152b at different positions in the vehicle width direction.

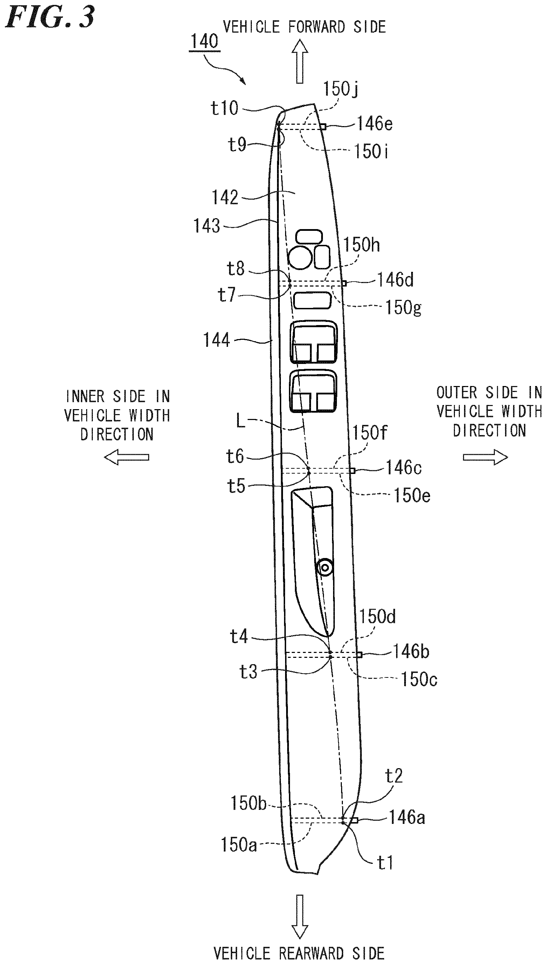

FIG. 3 is a top view of the armrest 140 shown in FIG. 1(b). Among the boss seating faces and the welding bosses that constitute the multiple connection portions, only the welding bosses that can be observed from above the armrest 140 are shown in FIG. 3, and these welding bosses are denoted as connection portions 146a to 146e in order to simplify the description. Note that it goes without saying that each of the welding bosses (connection portions) protrudes out from a boss seating face (not shown). Also, in order to facilitate understanding, the reinforcement ribs that cannot be observed from above the armrest 140 are illustrated with dashed lines, and the vertices of the notches formed in these reinforcement ribs are illustrated by dots.

As shown in FIG. 3, with the armrest 140 of the present embodiment, the multiple connection portions 146a to 146e (welding bosses strictly speaking) are provided in the vicinity of the outward end, with respect to the vehicle width direction, of the upper face 142 of the armrest 140 (in the vicinity of the end portion on the ornament 120 side), and the connection portion 146a given as an example in the above description is one of these connection portions. Also, reinforcement ribs 150c to 150j are formed between the side face 144 and the respective boss seating faces (not shown) of the connection portions 146b to 146e besides the connection portion 146a.

In other words, in the present embodiment, the multiple reinforcement ribs 150a to 150j are arranged side by side in the vehicle forward-rearward direction for the multiple connection portions 146a to 146e that are arranged in the vehicle forward-rearward direction in the armrest 140, and notches are also formed in the reinforcement ribs 150c to 150j in addition to the reinforcement ribs 150a and 150b. Note that since the notches are not shown in the top view, the vertices of the notches (not shown) formed in the reinforcement ribs 150a to 150j are illustrated by dots indicating the vertices t1 to t10 in FIG. 3.

In the present embodiment, the vertices t1 to t10 of the notches provided in the reinforcement ribs 150a to 150j arranged side by side in the vehicle forward-rearward direction, are set so as to be located farther inward in the vehicle width direction the closer the reinforcement rib is to the front of the vehicle. Accordingly, in a top view of the upper face 142 of the armrest 140 as shown in FIG. 3, the vertices t1 to t10 of the notches formed in the reinforcement ribs 150a to 150j form a line L (illustrated by a dashed double-dotted line in FIG. 3) that extends from the vehicle rearward side and outer side in the vehicle width direction to the vehicle forward side and the inner side in the vehicle width direction.

A corner portion 143 where the upper face 142 and the side face 144 are connected is formed on the inner side of the armrest 140 with respect to the vehicle width direction, and this corner portion 143 is stronger than other portions. Accordingly, since the line (weak portion line) formed by the vertices t1 to t10 of the notches of the reinforcement ribs 150a to 150j extends toward the high-strength corner portion 143 (toward the vehicle forward side and the inner side in the vehicle width direction), fractures are further not likely to form in the upper face 142 of the armrest 140 when a large collision load is exerted in a lateral collision or the like. This enables further reducing the amount of damage to the passenger P.

Note that although the example of a configuration in which two reinforcement ribs are arranged for one connection portion is described in the present embodiment (e.g., the reinforcement ribs 150a and 150b for the connection portion 146a), this does not exclude numbers other than two, and the number of connection portions provided on the armrest 140 is also merely one example. The number of connection portions and the number of reinforcement ribs arranged for one connection portion can be modified as appropriate, and the number of reinforcement ribs arranged for one connection portion may be set differently for each connection portion.

Also, in a configuration in which multiple reinforcement ribs are arranged for one connection portion, it is not necessarily required for notches to be provided in all of the reinforcement ribs. For example, a configuration is possible in which a notch is provided in only either one of the reinforcement ribs 150a and 150b provided in the connection portion 146a, and a notch is not formed in the other one, and in the case where three or more reinforcement ribs are arranged for one connection portion, a configuration is possible in which a notch is formed in at least one or more of the reinforcement ribs.

Furthermore, in the case where the multiple connection portions 146a to 146e are provided along the vehicle forward-rearward direction on the armrest 140, and two or more reinforcement ribs are arranged for each of the connection portions 146a to 146e as in the present embodiment, it is not necessarily required for the positions of the vertices of the notches of the reinforcement ribs arranged for the same connection portion to be different in the vehicle width direction. For example, the above-described effects can be obtained with a configuration in which the positions of the vertices of the notches of the reinforcement ribs arranged for the same connection portion are the same in the vehicle width direction, and the positions of the vertices of the notches are arranged farther inward in the vehicle width direction the closer the connection portion in the vicinity of the provided reinforcement ribs is to the front of the vehicle.

The positions with respect to the vehicle width direction have been described in detail for the vertices t1 to t10 of the notches provided in the reinforcement ribs 150a to 150j arranged side by side in the vehicle forward-rearward direction on the armrest 140 in the above description, but a further feature of the armrest 140 of the present embodiment lies in the position of the vertices t1 to t10 of the notches in the vehicle height direction. Specifically, with the armrest 140 of the present embodiment, the vertices t1 to t10 of the notches formed in the reinforcement ribs 150a to 150j are arranged closer to the upper face 142 (located closer to the back face 142a of the upper face 142) the closer the reinforcement rib is to front of the vehicle.

The following describes the positions in the vehicle height direction for the vertices of the notches with reference to FIG. 2(b), taking the example of the vertex t1 of the notch 152a of the reinforcement rib 150a, the vertex t2 of the notch 152b of the reinforcement rib 150b (see FIG. 2 (a)), and the vertex t10 of the notch of the reinforcement rib 150j (see FIG. 3) (referred to hereinafter as the notch 152j). Note that although the notches 152b and 152j and the vertices t2 and t10 thereof do not appear at the position of the cross-section along A-A in FIG. 2(b), the notches 152b and 152j and the vertices t2 and t10 are illustrated by dashed lines in order to facilitate understanding.

As shown in FIG. 2(b), letting distances d1, d2, and d10 be the distances from the vertices t1, t2, and t10 of the notches 152a, 152b, and 152j to the back face of the upper face 142 (heights of the remaining portions), these distances satisfy the relational expression "d1>d2>d10". In other words, among the notches 152a, 152b, and 152j, the vertex t1 of the notch 152a of the reinforcement rib 150a, which is located farthest away from the front of the vehicle, is located the farthest away from the back face 142a of the upper face 142. Also the vertices of the notches of the reinforcement rib 150b and subsequent reinforcement ribs approach (are closer to) the back face 142a of the upper face 142 the closer the reinforcement rib is to the front of the vehicle, and the vertex t10 of the notch 152j in the reinforcement rib 150j, which is the closest to the vehicle front side, is arranged at the closest position to the back face 142a of the upper face 142.

According to the above configuration, the distance between the vertex of the notch and the back face 142a of the upper face 142 is longer on the vehicle rearward side where the load of a placed elbow is most likely to be exerted on the armrest 140. In other words, the width (height) of the remaining portion above the vertex of the notch increases, and therefore the effect of absorbing the load of a placed elbow can be increased, and it is possible to ensure high strength against the load of a placed elbow. On the other hand, the distance between the vertex of the notch and the back face 142a of the upper face 142 decreases on the vehicle forward side of the armrest 140, thus increasing the amount of deformation of the reinforcement rib and enabling efficiently alleviating collision load, and making it possible to contribute to a reduction in the amount of damage to the passenger P. This enables both ensuring high strength that is normally required, and the dispersion of load that is necessary in a lateral collision.

As described above, according to the armrest 140 of the present embodiment, high strength for withstanding the load of a placed elbow is ensured using the reinforcement ribs 150a to 150j, and collision load can be dispersed by the notches 152a to 152j formed thereon while preventing breakage of the upper face 142 of the armrest 140. This makes it possible to reduce the amount of damage to the passenger caused by collision load without inviting the formation of an upward-pointed shape. Also, since the load of a placed elbow that is normally exerted can be absorbed by the portions of the reinforcement ribs remaining between the back face 142a of the upper face 142 and the vertices t1 to t10 of the notches 152a to 152j (remaining portions), it is possible to suppress design problems such as a poor appearance caused by the fracture line as in conventional technology.

Although a preferred embodiment of the present invention has been described above with reference to the accompanying drawings, the present invention is needless to say not limited to this example. A person skilled in the art will appreciate that various modifications and alterations can be made within the scope of the claims.

### INDUSTRIAL APPLICABILITY

The present invention is applicable to an armrest for a vehicle passenger and for attachment to a door trim that constitutes the interior of a vehicle door.

## Claims

1. An armrest (140) for a vehicle passenger and for attachment to a door trim (104) that constitutes the interior of a vehicle door (100), the armrest (140) comprising:
an upper face (142) for placement of an elbow of the passenger;
a side face (144) that extends downward from an inward end, with respect to a vehicle width direction, of the upper face (142);
a connection portion (146a to 146e) that is formed at a predetermined location at an outward end, with respect to the vehicle width direction, of the upper face (142), and is for connection to the door trim (104); and
a reinforcement rib (150a to 150j) that extends downward from a reverse side of the upper face (142) between the connection portion (146a to 146e) and the side face (144),
wherein a notch (152a, 152b, 152j) having a height such that a vertex thereof does not reach the upper face (142) is formed in the reinforcement rib (150a to 150j), **characterized in that**:
a plurality of the reinforcement ribs (150a to 150j) are arranged side by side in the vehicle forward-rearward direction on the armrest (140), and
the vertices of the notches (152a, 152b, 152j) formed in the plurality of reinforcement ribs (150a to 150j) are arranged at different positions in the vehicle width direction.

2. The armrest according to claim 1, wherein the vertices of the notches (152a, 152b, 152j) formed in the plurality of reinforcement ribs (150a to 150j) are located farther inward in the vehicle width direction the closer the reinforcement rib (150a to 150j) is to a vehicle front side.

3. The armrest according to claim 1 or 2, wherein the vertices of the notches (152a, 152b, 152j) formed in the plurality of reinforcement ribs (150a to 150j) are located closer to the upper face (142) the closer the reinforcement rib (150a to 150j) is to a vehicle front side.

## Patentansprüche

1. Armlehne (140) für einen Fahrzeugpassagier und zur Befestigung an einer Türverkleidung (104), die das Innere einer Fahrzeugtür (100) darstellt, wobei die Armlehne (140) aufweist:
eine obere Fläche (142) zur Platzierung eines Ellenbogens des Passagiers;
eine Seitenfläche (144), die sich mit Bezug auf eine Fahrzeugbreitenrichtung von einem inneren Ende der oberen Fläche (142) nach unten erstreckt;
einen Verbindungsabschnitt (146a bis 146e), der an einem vorgegebenen Ort an einem äußeren Ende der oberen Fläche (142) mit Bezug auf die Fahrzeugbreitenrichtung gebildet ist und für die Verbindung mit der Türverkleidung (104) vorgesehen ist; und
eine Verstärkungsrippe (150a bis 150j), die sich von einer hinteren Seite der oberen Fläche (142) zwischen dem Verbindungsabschnitt (146a bis 146e) und der Seitenfläche (144) nach unten erstreckt,
wobei eine Kerbe (152a, 152b, 152j), die eine Höhe aufweist, so dass ein Scheitelpunkt davon nicht die obere Fläche (142) erreicht, in der Verstärkungsrippe (150a bis 150j) gebildet ist,
**dadurch gekennzeichnet, dass**
mehrere Verstärkungsrippen (150a bis 150j) nebeneinander in der Fahrzeuglängsrichtung auf der Armlehne (140) angeordnet sind, und
die Scheitelpunkte der Kerben (152a, 152b, 152j), die in den mehreren Verstärkungsrippen (150a bis 150j) gebildet sind, an unterschiedlichen Positionen in der Fahrzeugbreitenrichtung angeordnet sind.

2. Armlehne gemäß Anspruch 1, wobei die Scheitelpunkte der Kerben (152a, 152b, 152j), die in den mehreren Verstärkungsrippen (150a bis 150j) gebildet sind, sich weiter innen in der Fahrzeugbreitenrichtung befinden, je näher sich die Verstärkungsrippe (150a bis 150j) zur Fahrzeugvorderseite befindet.

3. Armlehne gemäß Anspruch 1 oder 2, wobei die Scheitelpunkte der Kerben (152a, 152b, 152j), die in den mehreren Verstärkungsrippen (150a bis 150j) gebildet sind, sich näher an der oberen Fläche (142a) befinden, je näher sich die Verstärkungsrippe (150a bis 150j) zu einer Fahrzeugvorderseite befindet.

## Revendications

1. Accoudoir (140) destiné à un passager de véhicule et à être fixé à une garniture (104) de portière qui constitue l'intérieur d'une portière (100) de véhicule, l'accoudoir (140) comprenant :
une face supérieure (142) prévue pour le placement du coude d'un passager ;
une face latérale (144) qui s'étend vers le bas d'une extrémité vers l'intérieur, par rapport à une direction de largeur de véhicule, de la face supérieure (142) ;
une partie de liaison (146a à 146e) qui est formée à une position prédéterminée au niveau d'une extrémité vers l'extérieur, par rapport à la direction de largeur de véhicule, de la face supérieure (142), et qui est conçue pour une liaison avec la garniture (104) de portière ; et
une nervure de renfort (150a à 150j) qui s'étend vers le bas d'un côté arrière de la face supérieure (142) entre la partie de liaison (146a à 146e) et la face latérale (144),
dans lequel une encoche (152a, 152b, 152j) ayant une hauteur telle que son sommet n'atteint pas la face supérieure (142) est formée dans la nervure de renfort (150a à 150j),
**caractérisé en ce que** :
plusieurs nervures des nervures de renfort (150a à 150j) sont disposées côte à côte dans la direction avant-arrière de véhicule sur l'accoudoir (140), et
les sommets des encoches (152a, 152b, 152j) formées dans les plusieurs nervures de renfort (150a à 150j) sont disposés à des positions différentes dans la direction de largeur de véhicule.

2. Accoudoir selon la revendication 1, dans lequel les sommets des encoches (152a, 152b, 152j) formées dans les plusieurs nervures de renfort (150a à 150j) sont situés d'autant plus loin vers l'intérieur dans la direction de largeur de véhicule que la nervure de renfort (150a à 150j) est proche d'un côté avant de véhicule.

3. Accoudoir selon la revendication 1 ou 2, dans lequel les sommets des encoches (152a, 152b, 152j) formées dans les plusieurs nervures de renfort (150a à 150j) sont situés d'autant plus proche de la face supérieure (142) que la nervure de renfort (150a à 150j) est proche d'un côté avant de véhicule.
